(19) Europäisches Patentamt
European Patent Office
Office européen des brevets

(11) Veröffentlichungsnummer: **0 061 044**
**A1**

(12) # EUROPÄISCHE PATENTANMELDUNG

(21) Anmeldenummer: 82101754.8

(22) Anmeldetag: 05.03.82

(51) Int. Cl.³: C 08 F 226/12
C 08 F 220/32

(30) Priorität: 13.03.81 DE 3109749

(43) Veröffentlichungstag der Anmeldung: 29.09.82 Patentblatt 82/39

(84) Benannte Vertragsstaaten: CH DE FR GB LI NL

(71) Anmelder: SIEMENS AKTIENGESELLSCHAFT Berlin und München
Postfach 22 02 61
D-8000 München 22(DE)

(72) Erfinder: Birkle, Siegfried, Dr.
Veit-Stoss-strasse 46
D-8552 Höchstadt(DE)

(72) Erfinder: Rubner, Roland, Dr.
Buchenring 15
D-8551 Röttenbach(DE)

(72) Erfinder: Rissel, Eva-Maria
Lindenweg 19
D-8550 Forchheim(DE)

(54) **Polyvinylcarbazole.**

(57) Die Erfindung betrifft neue Vinylcarbazol-Copolymere und -Terpolymere. Die neuen Verbindungen sind durch die allgemeine Formel

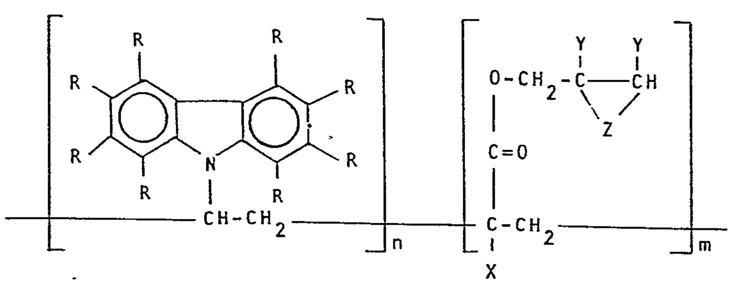

gekennzeichnet, worin n + m = 1 ist und für die Reste R, X, Y und Z folgendes gilt:

R = H, Halogen (F, Cl, Br, J), $-CH_2$-Halogen oder $-CH_2-CH_2$-Halogen (Reste R gleich oder verschieden);

X = H, $CH_3$ oder $C_2H_5$;

Y = H, Cl oder Br, wobei die Reste Y gleich oder verschieden sein können; und

Z = O oder S.

Die erfindungsgemäßen Verbindungen eignen sich als Materialen zur Herstellung von Resiststrukturen.

EP 0 061 044 A1

SIEMENS AKTIENGESELLSCHAFT Berlin und München

Unser Zeichen VPA 81 P 7513 E

Polyvinylcarbazole

Die Erfindung betrifft neue Vinylcarbazol-Copolymere und -Terpolymere.

Insbesondere betrifft die Erfindung Vinylcarbazol/Acrylat-Copolymere bzw. -Terpolymere der allgemeinen Formel

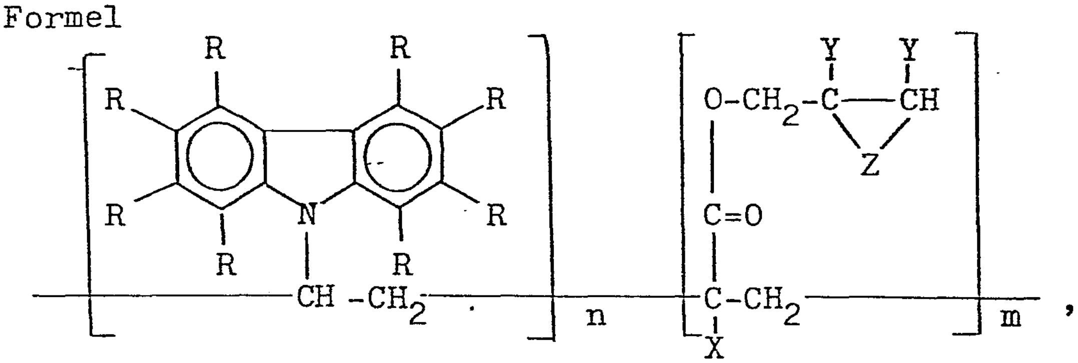

worin n + m = 1 ist und für die Reste R, X, Y und Z folgendes gilt:

R = H, Halogen (F, Cl, Br, J), $-CH_2$-Halogen oder $-CH_2-CH_2$-Halogen (Reste R gleich oder verschieden);

X = H, $CH_3$ oder $C_2H_5$;

Y = H, Cl oder Br, wobei die Reste Y gleich oder verschieden sein können; und

Z = O oder S.

In der vorstehenden Formel geben n und m die Zusammensetzung der Polymeren als Molenbruch an, wobei n etwa im Bereich zwischen 0,99 und 0,01 liegt. Bei Terpolymeren gilt beispielsweise: $m = m_1 + m_2$ bzw. $n = n_1 + n_2$, wobei die Indices 1 und 2 jeweils verschiedene Comonomere kennzeichnen. Im übrigen können sich bei den Terpolymeren die Comonomeren sowohl im Rest R als auch im Rest X oder Y unterscheiden.

Bh 2 Koe / 10.3.1981

Eine bevorzugte Verbindung ist das Copolymere aus (unsubstituiertem) Vinylcarbazol und Glycidylacrylat oder -methacrylat. Weitere Verbindungen sind beispielsweise Copolymere aus halogeniertem Vinylcarbazol und Glycidylmethacrylat sowie aus Vinylcarbazol und dem Schwefelanalogon des Glycidylmethacrylats (Thioglycidylmethacrylat).

Die neuen Verbindungen werden durch Copolymerisation von Vinylcarbazolen mit Glycidylacrylaten und/oder Thioglycidylacrylaten in Anwesenheit eines Radikalbildners bei erhöhter Temperatur hergestellt.

Die erfindungsgemäßen Verbindungen besitzen ein ausgezeichnetes Filmbildungsvermögen, widerstehen chemischen sowie physikalischen Ätzprozessen und sind für UV-, DUV- (Deep UV-), Elektronen- und Röntgenstrahlen empfindlich; hierbei dienen die Oxiranringe (Z = O) bzw. Thiiranringe (Z = S) als Vernetzungsstellen. Diese Verbindungen eignen sich demnach in hervorragender Weise für Strukturübertragungsprozesse in der Halbleitertechnik, d.h. zur Herstellung von Resiststrukturen. Derartige Verfahren sind insbesondere die Herstellung von Resiststrukturen aus Elektronen- bzw. Röntgen-Negativresists auf der Basis von Polyvinylcarbazol und die Herstellung von Resiststrukturen auf der Basis von Negativresists mittels kurzwelliger UV-Strahlen, wobei als Resistmaterial jeweils erfindungsgemäße Co- oder Terpolymere verwendet werden.

Anhand von Beispielen soll die Erfindung noch näher erläutert werden.

Beispiel 1

Herstellung von Copolymeren auf der Basis von Vinylcarbazol und Glycidylmethacrylat

Vor der Copolymerisation werden die Monomeren gereinigt. Das flüssige Glycidylmethacrylat wird hierbei unter Verwendung einer Vigreux-Kolonne destillativ von Verunreinigungen, insbesondere aber auch vom Stabilisator, abgetrennt. Das feste Vinylcarbazol wird durch Umkristallisieren aus Methanol gereinigt und getrocknet.

Das für die Polymerisation verwendete Gefäß besteht aus einem Wittschen Topf (Fassungsvermögen 2 l), der von einem Heizmantel umgeben ist und es gestattet, die Polymerisation bei verschiedenen Temperaturen durchzuführen. Das Reaktionsgefäß ist ferner mit einem Thermometer, einem Gaseinleitungsrohr, einem Rückflußkühler und einem Ablaßhahn versehen, der in den Gefäßboden eingelassen ist. Dadurch ist es möglich, daß die Polymerlösung bei einem gewünschten Umsatz schnell aus dem Reaktionsgefäß entfernt und dann weiterverarbeitet werden kann.

Für die Polymerisation werden bei Raumtemperatur unter Inertgas nacheinander sauerstofffreies Benzol (als Lösungsmittel), Glycidylmethacrylat und Vinylcarbazol im gewünschten Mengenverhältnis sowie Azoisobutyronitril zum Starten der Copolymerisation in das Reaktionsgefäß gegeben. Danach wird die Reaktionslösung sehr schnell auf die gewünschte Polymerisationstemperatur, beispielsweise den Siedepunkt des Benzols, gebracht, indem heißes Öl über einen Thermostaten durch den Heizmantel gepumpt wird. Nach dem Ende der Polymerisation läßt man die heiße Polymerlösung über den Ablaßhahn schnell in kaltes, mit Hydrochinon versehenes Methanol einfließen.

Das ausgefällte Polymere wird von den flüssigen Bestandteilen getrennt, im Vakuum getrocknet und - zur Reinigung - mehrmals aus Chloroform/Hexan-Gemischen umgefällt. Dann wird das Copolymerisat im Hochvakuum von noch vorhandenem Lösungsmittel befreit.

Von den auf die beschriebene Weise aus Vinylcarbazol und Glycidylmethacrylat in großer Zahl und unterschiedlicher Zusammensetzung hergestellten Copolymerisaten seien stellvertretend folgende Beispiele angeführt:

a) 0,78 Mol Glycidylmethacrylat und 0,78 Mol Vinylcarbazol sowie 0,25 mMol Azoisobutyronitril werden in 500 ml Benzol für 90 min auf eine Temperatur von ca. 80°C erwärmt. Nach beendeter Reaktion und Aufarbeitung der Reaktionslösung wird ein feinpulveriges Polymermaterial erhalten, das ca. 70 Mol-% Glycidylmethacrylat und 30 Mol-% Vinylcarbazol enthält.

b) Bei einem anderen Copolymerisationsansatz werden 0,12 Mol Glycidylmethacrylat und 0,039 Mol Vinylcarbazol sowie 0,05 mMol Azoisobutyronitril in 100 ml Benzol für 65 min auf ca. 80°C erhitzt. Das dabei gebildete Copolymerisat enthält ca. 82 Mol-% Glycidylmethacrylat und 18 Mol-% Vinylcarbazol.

c) Werden 0,035 Mol Glycidylmethacrylat und 0,12 Mol Vinylcarbazol sowie 0,05 mMol Azoisobutyronitril in 100 ml Benzol bei ca. 80°C für die Dauer von 35 min copolymerisiert, so besteht das Copolymere aus ca. 52 Mol-% Glycidylmethacrylat und 48 Mol-% Vinylcarbazol.

d) Werden 0,27 Mol Glycidylmethacrylat und 0,05 Mol Vinylcarbazol sowie 0,1 mMol Azoisobutyronitril in 200 ml Benzol bei ca. 80°C für die Dauer von 80 min copolymerisiert, so besteht das dabei gebildete Copolymere zu ca. 90 Mol-% aus Glycidylmethacrylat und zu ca. 10 Mol-% aus Vinylcarbazol.

Beispiel 2

Herstellung von Copolymeren auf der Basis von halogeniertem Vinylcarbazol und Glycidylmethacrylat

Analog zu der in Beispiel 1 beschriebenen Verfahrensweise werden Copolymere unter Verwendung von chloriertem bzw. bromiertem Vinylcarbazol hergestellt. Dazu werden beispielsweise 0,5 Mol Glycidylmethacrylat und 0,45 Mol Monochlor- bzw. Monobromvinylcarbazol sowie 0,05 mMol Azoisobutyronitril in 300 ml Benzol bei ca. 80°C 70 min lang umgesetzt. Das hierbei entstandene Copolymerisat enthält - unabhängig vom Halogen - ca. 30 bis 35 Mol-% des entsprechenden Vinylcarbazolderivates.

Beispiel 3

Herstellung von Copolymeren auf der Basis von Vinylcarbazol (sowie dessen Derivaten) und Glycidylacrylat

Analog zu der in Beispiel 1 beschriebenen Verfahrensweise werden - ausgehend von unterschiedlich zusammengesetzten Monomermischungen - Copolymere synthetisiert, deren Zusammensetzung im Falle von halogeniertem Vinylcarbazol praktisch unabhängig ist von der Art des Halogens.

a) 0,078 Mol Glycidylacrylat und 0,078 Mol Vinylcarbazol sowie 0,05 Mol Azoisobutyronitril werden in 200 ml Benzol 25 min lang auf ca. 80°C erwärmt. Nach beendeter Reaktion und Aufarbeitung des Reaktionsgemisches wird ein Copolymerisat erhalten, das ca. 55 Mol-% Glycidylacrylat und 45 Mol-% Vinylcarbazol enthält.

b) Ausgehend von 0,039 Mol Glycidylacrylat und

0,12 Mol Vinylcarbazol sowie 0,03 mMol Azoisobutyronitril in 100 ml Benzol wird nach einer Reaktionszeit von 17 min bei ca. 80°C ein Copolymerisat erhalten, das ca. 44 Mol-% Glycidylacrylat und 56 Mol-% Vinylcarbazol enthält.

c) Zur Herstellung halogenhaltiger Copolymerer werden 0,06 Mol Monochlor- bzw. Monobromvinylcarbazol und 0,058 Mol Glycidylacrylat sowie 0,025 mMol Azoisobutyronitril in 200 ml Benzol bei ca. 80°C 25 min lang umgesetzt. Das gebildete Copolymerisat enthält ca. 53 Mol-% Glycidylacrylat und 47 Mol-% Chlor- bzw. Bromvinylcarbazol.

Beispiel 4

Herstellung von Copolymeren auf der Basis von Vinylcarbazol (sowie dessen Derivaten) und dem Schwefelanalogon von Glycidylmethacrylat bzw. Glycidylacrylat

Analog der in Beispiel 1 beschriebenen Verfahrensweise lassen sich ausgehend von den in den Beispielen 1 bis 3 genannten Vinylcarbazolmonomeren und den schwefelanalogen Comonomeren des Glycidylmethacrylats bzw. -acrylats - bei entsprechenden Mengenverhältnissen - schwefelhaltige Copolymerisate synthetisieren, die die gleiche Zusammensetzung besitzen wie die entsprechenden Sauerstoffverbindungen.

2 Patentansprüche

Patentansprüche

1. Polyvinylcarbazole der allgemeinen Formel

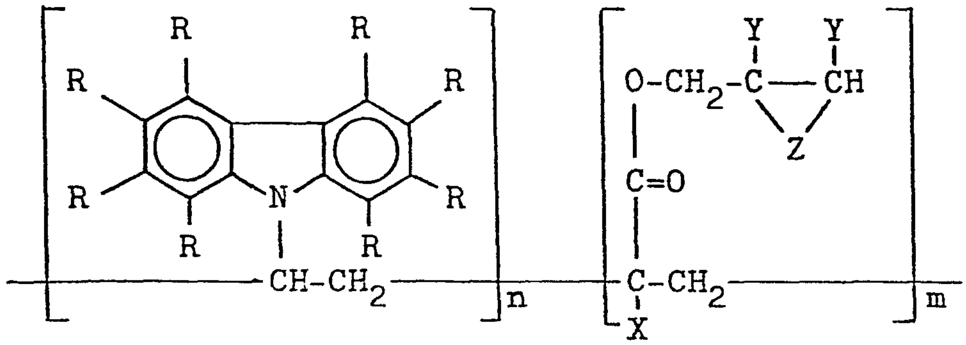

,

worin n + m = 1 ist und für die Reste R, X, Y und Z folgendes gilt:

R = H, Halogen (F, Cl, Br, J), $-CH_2$-Halogen oder $-CH_2-CH_2$-Halogen (Reste R gleich oder verschieden);

X = H, $CH_3$ oder $C_2H_5$;

Y = H, Cl oder Br, wobei die Reste Y gleich oder verschieden sein können; und

Z = O oder S.

2. Vinylcarbazol/Glycidyl(meth)acrylat-Copolymerisat.

Europäisches Patentamt

**0061044**

## EUROPÄISCHER RECHERCHENBERICHT

Nummer der Anmeldung

EP 82 10 1754

| Kategorie | EINSCHLÄGIGE DOKUMENTE<br>Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | CHEMICAL ABSTRACTS, Band 81, Nr. 20, 18. November 1974, Seite 656, linke Spalte, Nr. 129892u, Columbus, Ohio, USA & JP - A - 73 35497 (CANON K.K.) 29-10-1973 * Zusammenfassung * --- | 1,2 | C 08 F 226/12<br>C 08 F 220/32 |
| A | FR-A-2 228 077 (ANVAR) * Ansprüche * --- | 1,2 | |
| A | DE-A-1 522 561 (AGFA) * Ansprüche * --- | 1,2 | |
| A | FR-A-1 198 188 (SAINT-GOBAIN) * Ansprüche * ----- | 1,2 | |
| | | | **RECHERCHIERTE SACHGEBIETE (Int. Cl. 3)** |
| | | | C 08 F |

Der vorliegende Recherchenbericht wurde für alle Patentansprüche erstellt.

| Recherchenort | Abschlußdatum der Recherche | Prüfer |
|---|---|---|
| DEN HAAG | 18-06-1982 | MERGONI M. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument